# EUROPEAN PATENT SPECIFICATION

(11) **EP 3 477 894 B1**
(45) Date of publication and mention of the grant of the patent: **05.05.2021**
(21) Application number: 17819027.8
(22) Date of filing: 31.05.2017
(51) Int. Cl.: H04L 12/803

(54) **METHOD AND DEVICE FOR CONTROLLING VIRTUALIZED BROADBAND REMOTE ACCESS SERVER (VBRAS), AND COMMUNICATION SYSTEM**
VERFAHREN UND VORRICHTUNG ZUM STEUERN EINES VIRTUALISIERTEN BREITBAND-FERNZUGRIFFSSERVERS (VBRAS) UND KOMMUNIKATIONSSYSTEM
PROCÉDÉ ET DISPOSITIF DESTINÉS À LA COMMANDE D'UN SERVEUR D'ACCÈS À DISTANCE À LARGE BANDE VIRTUALISÉ (VBRAS) ET SYSTÈME DE COMMUNICATION

(30) Priority: 27.06.2016 CN 201610485777
(43) Date of publication of application: 01.05.2019
(73) Proprietor: ZTE Corporation, Shenzhen, Guangdong 518057 (CN)
(72) Inventor: ZHENG, Lijun, Shenzhen Guangdong 518057 (CN)
(74) Representative: Ipsilon
(86) International application number: PCT/CN2017/086683
(87) International publication number: WO 2018/001030

(56) References cited:
- EP-A1- 2 536 068
- CN-A- 101 778 425
- CN-A- 102 377 671
- CN-A- 105 024 875
- CN-A- 105 610 632
- CN-A- 105 610 632
- US-A1- 2003 039 244

## Description

### Field of the Disclosure

The present disclosure relates to the field of communication, and particularly to a method and apparatus for controlling a virtualized broadband remote access server, and a communication system.

### Background of the Disclosure

A traditional BRAS (Broadband Remote Access Server) has many drawbacks, for example, exclusiveness of BRAS hardware devices. Telecommunication operators usually centrally purchase different BRAS which are private hardware devices from different manufacturers for network and service platforms. The substitutability between services of these private hardware devices is poor and there exists a lot of waste of performance so that telecommunication operators invest a lot in device construction. Since private hardware for different services cannot be universally used, a period for developing new services is long, and subsequent operation and maintenance costs increase, thereby causing a large waste in device spaces and energy; as can be seen from EP 2 536 068 A1 and from CN 105 610 632 A.

Based on this status quo, new networks and service platforms under the NFV (Network Functions Virtualization) technology have emerged. NFV technology realizes network functions virtualization by introducing cloud platforms and using general-purpose hardware such as x86 and virtualization technology. It is hoped that various functions of network edge devices, such as BRAS, can be separated out and implemented by a general-purpose server. The network and service platform functions no longer depend on private hardware and resources can be fully and flexibly shared to realize rapid development and deployment of new services, thereby simplifying the network, improving a utilization rate of equipment resources, and reducing costs.

VBRAS (BRAS network function virtualization, hereinafter referred to as virtualized broadband remote access server) is based on a core idea of NFV architecture and depends on traditional BRAS network architecture problem analysis (mainly focused on BRAS service control management portion) and compatibility with existing network equipment. It is only necessary to separate the control/forwarding of BRAS service with respect to the BRAS network device, perform centralized management and control for the BRAS service control portion, and perform routing forwarding via the original device and retain the forwarding function of the original device.

The VBRAS includes a load balance component, a protocol component, and a management component. After the VBRAS service point is deployed once in an instantiated manner, as a number of users get online, the protocol component will get into a bottleneck while processing the user's protocol message, and the protocol component's capacity needs to be expanded at this time. In the case of a small number of users, the protocol component whose capacity is already expanded is redundant and occupies a lot of cloud platform resources. At this time, resources need to be released to maximize resource utilization; and the existing VBRAS cannot implement dynamic management of the protocol component and reduces the user's experience in a certain degree.

This section provides background information related to the present invention which is not necessarily prior art.

### Summary of the Disclosure

Embodiments of the present disclosure provide a control method and a control apparatus of a virtualized broadband remote access server, and a communication system, to solve an existing problem that the VBRAS cannot implement dynamic management of the protocol component.

According to an aspect, there is provided a control method according to claim 1. ,

According to an aspect, there is provided a control apparatus according to claim 11.

According to another aspect, there is provided a communication system, including at least one virtualized broadband remote access server, and a control apparatus according to embodiments of the present disclosure.

According to another aspect, there is provided a computer storage medium storing computer executable instructions for executing the aforementioned control method.

Advantageous effects of embodiments of the present disclosure are as follows:
Embodiments of the present disclosure provide a VBRAS control method. During operation, it is feasible to obtain the performance parameters of the protocol component in the VBRAS shared resource pool, such as the number of online users, a utilization rate of a memory of the protocol component and a utilization rate of a CPU of the protocol component, and perform enabled control for the protocol component in the VBRAS according to the performance parameters, thereby implementing capacity-expanding and capacity-shrinking control of the protocol component in the shared resource pool and achieving dynamic capacity expansion or capacity shrinkage of the protocol component, so that it is possible to reasonably use the resources of the protocol component, and solve the current problem about failure to implement dynamic management of the VBRAS protocol component.

This section provides a summary of various implementations or examples of the technology described in the invention, and is not a comprehensive invention of the full scope or all features of the disclosed technology.

### Brief Description of Drawings

FIG. 1 is a flowchart of a VBRAS control method according to an embodiment of the present disclosure;
FIG. 2 is a structural schematic diagram of a VBRAS control apparatus according to an embodiment of the present disclosure;
FIG. 3 is a structural schematic diagram of a VBRAS control plane in an embodiment of the present disclosure;
FIG. 4 is a schematic diagram of obtaining performance parameters in an embodiment of the present disclosure;and
FIG. 5 is a flowchart of a VBRAS control method in another embodiment of the present disclosure.

### Detailed Description of Preferred Embodiments

The technical solutions in the embodiments of the present disclosure will be clearly and completely described with reference to figures in the embodiments of the present disclosure. It is obvious that the described embodiments are only partial embodiments of the present disclosure, and not all embodiments. All other embodiments obtained by those having ordinary skill in the art based on the embodiments of the present disclosure without making any inventive efforts fall within the scope of extent of the present disclosure.

The present disclosure will now be described by way of embodiments with reference to the figures.

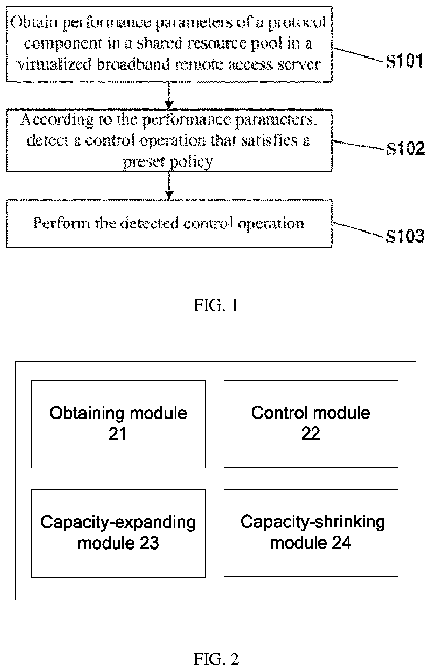

FIG. 1 is a flowchart of a VBRAS control method according to an embodiment of the present disclosure. As known from FIG. 1, the VBRAS control method provided in this embodiment includes steps S101,S102, and S103:
in step S101: obtain performance parameters of a protocol component in a shared resource pool in a virtualized broadband remote access server;
in step S102: according to the performance parameters, detect a control operation that satisfies a preset policy; the control operation is used to control the protocol component in the shared resource pool in the virtualized broadband remote access server; and
in step S103: perform the detected control operation.

The embodiment of the present disclosure provides a VBRAS control method. During operation, it is feasible to obtain the performance parameters of the protocol component in the shared resource pool in in the VBRAS, such as the number of users who get online, a utilization rate of a memory of the protocol component and a utilization rate of a CPU of the protocol component, and perform enabled control for the protocol component in the VBRAS according to the performance parameters, thereby implementing capacity-expanding and capacity-shrinking control of the protocol component in the shared resource pool and achieving dynamic capacity expansion or capacity shrinkage of the protocol component, so that it is possible to reasonably use the resources of the protocol component, and solve the existing problem about failure to implement dynamic management of the VBRAS protocol component.

In some embodiments, the control method in the above embodiment further includes: not performing a second control operation if the second control operation is detected when a first control operation is performed; re-detecting a control operation that satisfies a preset policy, after the execution of the first control operation is completed.

In some embodiments, a manner of obtaining the performance parameters of the protocol component in the shared resource pool in the virtualized broadband remote access server in the foregoing embodiment includes: using at least one of a simple network management protocol, a secure shell protocol, a remote login protocol and a hypertext transfer protocol to actively obtain the performance parameters from a management component of the virtualized broadband remote access server.

In some embodiments, a manner of obtaining the performance parameters of the protocol component in the shared resource pool in the virtualized broadband remote access server in the foregoing embodiment includes: receive the performance parameters uploaded by the management component of the virtualized broadband remote access server.

In some embodiments, a manner of obtaining the performance parameters of the protocol component in the shared resource pool in the virtualized broadband remote access server in the foregoing embodiment includes: using at least one of a simple network management protocol, a secure shell protocol, a remote login protocol and a hypertext transfer protocol to actively obtain the performance parameters from a management component of the virtualized broadband remote access server, and receive the performance parameters uploaded by the management component of the virtualized broadband remote access server.

In some embodiments, the control method in the foregoing embodiment further includes: configuring at least one standby protocol component for the shared resource pool, the standby protocol component being configured to perform the service of the to-be-expanded protocol component when the detected control operation is a capacity-expanding operation.

In some embodiments, the control method in the above embodiment further includes receiving and executing a user-initiated control operation.

In some embodiments, the control method in the foregoing embodiment further includes: receiving the user's setting operation, and configuring a data type of the performance parameters and/or a capacity expansion upper limit value and a capacity shrinkage lower limit value of each performance parameter in the preset policy.

In some embodiments, the control method in the foregoing embodiment further includes: receiving the user's setting operation, and configuring a data type of the performance parameters.

In some embodiments, the control method in the foregoing embodiment further includes: receiving the user's setting operation, and configuring a capacity expansion upper limit value and a capacity shrinkage lower limit value of each performance parameter in the preset policy.

In some embodiments, the control method in the foregoing embodiment further includes: receiving the user's setting operation, and configuring a data type of the performance parameters, a capacity expansion upper limit value and a capacity shrinkage lower limit value of each performance parameter in the preset policy.

In some embodiments, the control operation includes a capacity-expanding operation.

The performing the detected control operations in the foregoing embodiment includes: activating a protocol component which is not added to the shared resource pool, and adding the newly-activated protocol component to the shared resource pool.

In some embodiments, the performance parameters in the foregoing embodiment include at least one of the following parameters: a number of users on respective protocol components of all protocol components that have already been added to the shared resource pool, a protocol component network port bandwidth, a utilization rate of the memory of the protocol component and a utilization rate of the CPU of the protocol component;
the step of, according to the performance parameters, detecting the control operation that satisfies the preset policy includes:
calculating the total number of online users according to the number of users on respective protocol components of all protocol component that have already been added to the shared resource pool;
judging whether at least one of the total number of online users, the number of users on the protocol components, the protocol component network port bandwidth, the utilization rate of the memory of the protocol component and the utilization rate of the CPU of the protocol component is more than an upper threshold of corresponding parameter in the preset policy;
if yes, hitting the capacity-expanding operation.

In some embodiments, the capacity-expanding operation in the foregoing embodiment includes: using an index number of the protocol component to report the protocol component to the control component; and establishing a binding correspondence relationship between the index number of the protocol component and an Ethernet network port of a load sharing component; completing service distribution based on the binding correspondence relationship.

In some embodiments, the control method in the foregoing embodiment further includes: updating an upper threshold corresponding to the total number of online users in the preset policy according to the total number of protocol components that have already been added to the shared resource pool.

In some embodiments, the control operation includes a capacity-shrinking operation, and the performing the detected control operation in the foregoing embodiment includes: making a portion of protocol components that have already been added to the shared resource pool hibernate, and deleting the hibernating protocol components from the shared resource pool. In practical applications, hibernating may be triggering the protocol component that undergoes the capacity-shrinking operation. Certainly, it is also possible to allow the protocol component which operates the earliest to hibernate.

In some embodiments, the performance parameters in the foregoing embodiment include the number of users on respective protocol components of all protocol components that have already been added to the shared resource pool;
the step of, according to the performance parameters, detecting the control operation that satisfies the preset policy includes:
judging whether the number of users on the protocol component is less than a lower threshold in the preset policy;
if yes, hitting the capacity-shrinking operation.

In some embodiments, after hitting the capacity-shrinking operation, the control method in the foregoing embodiment further includes:
periodically detecting whether to hit the capacity-shrinking operation;
if yes, and if the number of times of consecutive hits is more than an execution threshold, performing the capacity-shrinking operation.

The purpose of setting the number of consecutive hits in this embodiment is to prevent oscillation and trigger unnecessary frequent capacity-shrinking operations.

FIG. 2 is a structural schematic diagram of a VBRAS control apparatus according to an embodiment of the present disclosure. As shown in FIG. 2, the VBRAS control apparatus provided in this embodiment includes: an obtaining module 21, a control module 22, a capacity-expanding module 23, and a capacity-shrinking module 24, wherein,
the obtaining module 21 is configured to obtain performance parameters of a protocol component in a shared resource pool in a virtualized broadband remote access server; the control module 22 is configured to, according to the performance parameters, detect a control operation that satisfies a preset policy; the control operation is used to control the protocol component in the shared resource pool in the virtualized broadband remote access server, and the control operation comprises a capacity-expanding operation and a capacity-shrinking operation; the capacity-expanding module or capacity-shrinking module performs a detected control operation;
the capacity-expanding module 23 is configured to activate a protocol component that is not added to the shared resource pool, and add the newly-activated protocol component to the shared resource pool; and
the capacity-shrinking module 24 is configured to make a portion of protocol components that have already been added to the shared resource pool hibernate, and delete the hibernating protocol components from the shared resource pool.

In some embodiments, the control module 22 in the above embodiment is configured not to perform a second control operation if the second control operation is detected during a first control operation is performed; and configured to re-detect a control operation that satisfies a preset policy, after the execution of the first control operation is completed.

In some embodiments, the performance parameters in the foregoing embodiment include at least one of the following parameters: number of users on respective protocol components of all protocol components that have already been added to the shared resource pool, a protocol component network port bandwidth, a utilization rate of a memory of the protocol component and a utilization rate of a CPU of the protocol component; the control module is configured to calculate a total number of online users according to the number of users on respective protocol components of all protocol component that have already been added to the shared resource pool; judge whether at least one of the total number of online users, the number of users on the protocol components, the protocol component network port bandwidth, the utilization rate of the memory of the protocol component and the utilization rate of the CPU of the protocol component is greater than an upper threshold of each parameter in the preset policy; if yes, hit the capacity-expanding operation; and/or the performance parameters include the number of users on respective protocol components of all protocol components that have already been added to the shared resource pool, the control module is configured to judge whether the number of users on the protocol component is less than a lower threshold in the preset policy; if yes, hit the capacity-shrinking operation.

In practical application, all the functional modules in the embodiment shown in FIG. 2, such as the obtaining module 21, the control module 22, the capacity-expanding module 23, and the capacity-shrinking module 24, may be implemented by using a processor, an editing logic device, or the like.

Correspondingly, an embodiment of the present disclosure provides a communication system, including at least one virtualized broadband remote access server, and a VBRAS control apparatus provided by the embodiment of the present disclosure.

The present disclosure will now be described in conjunction with an application scenario.

The VBRAS is based on a core idea of NFV architecture and depends on traditional BRAS network architecture problem analysis (mainly focused on the BRAS service control management portion) and compatibility with existing network equipment. It is only necessary to separate the control/forwarding of BRAS service with respect to the BRAS network device, perform centralized management and control for the BRAS service control portion, and perform routing forwarding via the original device and retain the forwarding function of the original device. Network deployment of a VBRAS service may be decomposed into a set of VNFs and VNFLs (VNFL: VNFLink). Each VNF can be decomposed into a set of VNFCs (VNF Component) and internal connection graphs, each VNFC being mapped to a VM; each VNFL corresponds to an IP connection; through such an orchestration process, a VBRAS service network may be decomposed from top to bottom through MANO until allocable resources ,such as VM correspondingly, are allocated by NFVI . The related service installation and configuration on the VM is issued by MANO and triggered to execute by MANO. When the VBRAS service is deployed each time, the deployment may be understood as instantiating the VNF one time. Main functions of VNFM (VNF Manage) mainly include VNF lifecycle management, policy management, and application monitoring management.

The present embodiment provides an auto scaling policy method for VBRAS service deployment, to solve the problem about insufficient utilization of BRAS device resources in the prior art.

The technical solution according to the present embodiment includes:
A monitoring module of the NFM collects performance data on the management component through a collection channel, and then the VNFM performs policy analysis for the collected data, judges that the performance data reaches the capacity-expanding upper limit value, triggers the VNFM to perform capacity expansion for a protocol component, adds the component to the load sharing pool, and begins to perform performance data collection for the component. Likewise, when the performance data is lower than a certain lower threshold, the capacity is shrunk for a protocol component, the resource recovery is completed, the component is deleted from the load sharing pool, and the performance index collection for the component is terminated.

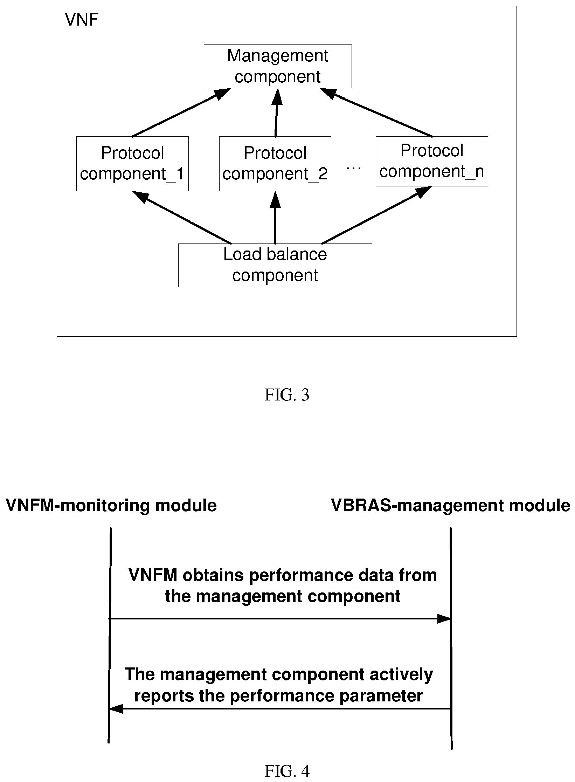

In the present embodiment, in an initial stage of the VBRAS networking, there are a management component, a load balance component, and a protocol component which is named protocol component_1. The protocol component is named in turn as the capacity is expanded for the protocol component, for example, protocol component_2 and protocol component_3, increasing progressively. The network of the VBRAS control plane after capacity expansion is as shown in FIG. 3.

In some embodiments, there are two kinds of interfaces through which the VNFM collects performance data: the VNFM actively obtains the performance data from the management component, and the management component reports the performance data to the VNFM. The collection method mainly includes SNMP (Simple Network Management Protocol), SSH (Secure Shell) protocol, TELNET protocol, and HTTP (HyperText Transfer Protocol).

In some embodiments, the performance data collected by the VNFM mainly includes: a total number of online users (the sum of the number the users on all protocol components), the number of users on the protocol component, the protocol component network port bandwidth, the utilization rate of the memory of the protocol component, and the utilization rate of the CPU of the protocol component. Each performance data has an upper threshold and a lower threshold. When one or more of these performance data reach the upper threshold, the capacity-expanding operation is triggered. The capacity-shrinking operation is triggered by the lower threshold of the number of online users on the protocol component for execution.

In some embodiments, a setting window is provided on the MANO, and the performance data to be collected supports single-item selection and multi-item selection function, that is, it is possible to choose to collect perform data of any combinations, and perform policy judgment. The monitoring module temporarily does not collect the performance data that are not selected. The upper and lower thresholds, number of hitting and collection time of the performance indices are configurable.

In some embodiments, after the VNFM policy module judges that a protocol component needs to be expanded according to the collected performance index data, and a VNFM lifecycle module triggers execution of the operation of expanding capacity for the protocol component. The expanded protocol component reports the index number of the protocol component to the control component through a TIPC protocol, so that the control component can identify the currently-expanded protocol component. According to the index number, the performance indices of respective protocol component are collected on the control plane.

In some embodiments, after the capacity of the protocol component is expanded, the protocol component needs to be added to the load sharing pool by employing the following method: when a protocol component is newly increased each time, establish a separate vlan network on the protocol component and the load sharing component as a message distribution channel, establish a correspondence relationship between the index number of the protocol component and the Ethernet network port on the load sharing component, and bind the Ethernet network port in an OVS network for the user to distribute the message. After the capacity of the protocol component is shrunk, the protocol component is deleted and the protocol component is unbound from the OVS bridge of the load sharing component. Each protocol component is numbered by employing a minimum idle index value method.

In some embodiments, during the capacity expansion of the protocol component, since the existing protocol component has reached the maximum processing capability when the newly-added protocol component is not ready, there might be a case in which the user gets online intermittently in a short time period. Therefore, in this case, a protocol component is backed up, the user first gets on the backup protocol component when the capacity-expanding operation is performed, then the newly-added component serves as a backup component, the user gets onto the newly-added protocol component when capacity expansion is performed next time, and so on so forth.

In some embodiments, the upper threshold of the total number of online users used for capacity expansion is a dynamic value, and the magnitude of the upper threshold is related to the number of existing protocol components. For example, in an initial state there are a protocol component and the backup protocol component, the upper threshold for the capacity expansion is set as a base N_up, the capacity is expanded to a third protocol component when the total number of online users collected on the management component reaches N_up, and the capacity is expanded to a fourth protocol component when the total number of users collected on the management component reaches 2*N_up, and so on so forth.

In some embodiments, the VNFM analyzes the data collected by the shrinkage. For example, if the number of users on a certain protocol component collected by a shrinking task is lower than N_down, and the capacity-shrinking operation is consecutively hit H_down times, the capacity of the protocol component is shrunk. In particular, when all users are offline, that is, when the number of users on each protocol component is 0, the protocol component that satisfies the capacity-shrinking condition will be deleted first, and last two protocol components will be retained and not be deleted. The remaining undeleted protocol components may be any two of all protocol components.

In some embodiments, the monitoring of the capacity-expanding task is performed in parallel with the monitoring of the capacity-shrinking capacity. However, at a certain moment, only one action is triggered for execution. For example, when the capacity-expanding operation is currently being performed, the number of users on a certain protocol component is found to fall below the lower threshold and the capacity of the protocol component needs to be shrunk, the act will not be performed, and whether to perform the deletion operation is judged according to the re-collected data after the execution of the previous action is completed.

In some embodiments, the capacity-expanding operation and the capacity-shrinking operation simultaneously support manual trigger and automatic trigger. The manual trigger mode means newly increasing the capacity-expanding operation and capacity-shrinking operation at the VNFM lifecycle management module. It is possible to trigger the capacity-expanding operation or capacity-shrinking operation by manually selecting and inputting parameters. The automatic trigger mode means triggering the capacity-expanding operation or capacity-shrinking operation by collecting the performance indices and performing policy judgment as stated above.

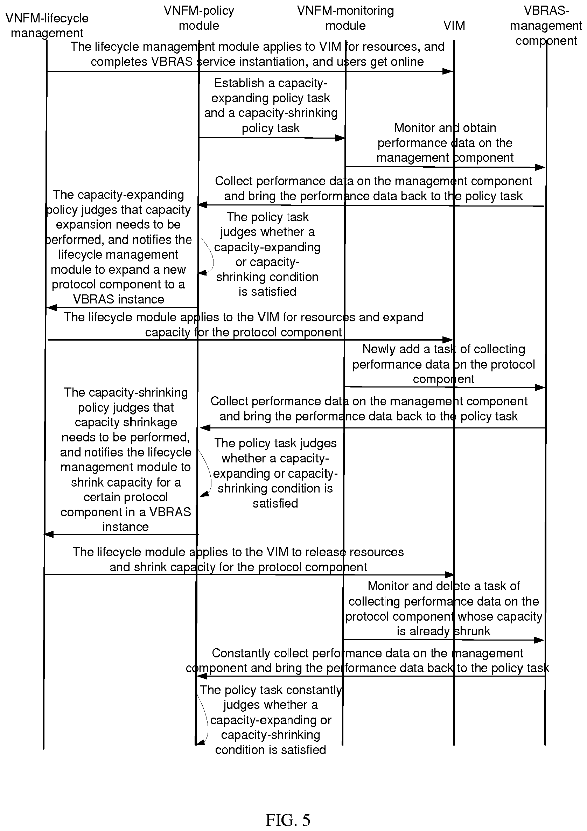

With reference to FIG. 5, the method according to the present embodiment mainly includes the following steps:
1) Deploy the instantiated VBRAS service model on the MANO platform. The model defines a networking model of the VBRAS service and a VBRAS service auto scaling strategy. The MANO platform analysis model completes the networking and service deployment, i.e., instantiates a VBRAS service, and then completes online-related service configuration of users on each component, including control plane configuration and forwarding plane configuration.
2) Find the VBRAS policy in the policy module of the VNFM platform. Under the policy, create a capacity-expanding task and a capacity-shrinking task respectively. Both the capacity-expanding task and the capacity-shrinking task must be associated with the VBRAS instance, and select the performance index data to be collected or combine data, and set the upper threshold, hitting times, and collection interval time parameter on each performance index.
3) The VNFM monitoring module selects a collection channel and sets the collection channel information, for example, collect data in a SSH and TELNET manner. It is necessary to set information of the management component such as IP address, user name and password to obtain the performance data on the management component. The collection method employs a manner that the VNFM obtains actively, or a manner that the management component actively reports to the VNFM.
4) The user gets online, and the monitoring module obtains the performance data on the management component, including the total number of online users on the management component, the network port bandwidth on each protocol component, the number of online users, the utilization rate of memory, and the utilization rate of the CPU. The policy module judges whether the performance data meets the capacity-expanding and capacity-shrinking conditions according to the capacity-expanding and capacity-shrinking policy formulated in the policy (as shown in FIG. 5).
5) When the total number of online users reaches an online threshold N_UP (or the utilization rate of the memory, the utilization rate of the CPU and the network port bandwidth of the first protocol component reach the upper threshold), and after hitting is achieved consecutively H_up times, the policy module triggers the notification, the NFM lifecycle module performs the capacity-expanding operation, and VIM completes capacity expansion for the third protocol component. If the users continue to go online, the total number of users reaches 2*N_UP (or the utilization rate of the memory, the utilization rate of the CPU and the network port bandwidth of the first protocol component reach the upper limit value) and hitting is achieved consecutively H_up times, the policy module triggers the operation of expanding capacity for the fourth protocol component.
6) The expanded protocol component reports the index number of the protocol component to the control component through the TIPC protocol, so that the control component can identify the currently-expanded protocol component. The performance indices of each protocol component are collected on the control plane according to the index number. Meanwhile, the protocol component needs to be added to the load sharing pool by employing the following method: when a protocol component is newly increased each time, establish a separate vlan network on the protocol component and the load sharing component as a message distribution channel, establish a correspondence relationship between the index number of the protocol component and the Ethernet network port on the load sharing component, and bind the Ethernet network port in an OVS network for the user to distribute the message.
7) When the users gets offline and when the number of users on a certain protocol component is lower than the lower threshold N_down, and hitting is achieved consecutively H_down times, the policy module triggers the operation of deleting the protocol component.
8) After the capacity of a certain protocol component is shrunk, the VBRAS service needs to delete the protocol component from the load sharing pool, and meanwhile the monitoring module does not need to monitor the number of users, the utilization rate of the memory and the utilization rate of the core on the protocol component any longer.
9) All users are offline, i.e., the number of users on all protocol components is below the lower limit value. At this time, the operation of deleting each protocol component is performed. The deletion order goes in a way that protocol components that satisfy the capacity-shrinking condition are deleted first, and last two protocol components are not deleted, to prevent a case that no protocol component processes the protocol message if a user gets online again.
10) Users may get online and offline crosswise. The capacity-expanding task and capacity-shrinking task are performed at the same time. If next capacity-expanding action needs to be performed during capacity expansion and capacity shrinkage, next operation is performed only after the performance of the previous action is completed.
11) In the VNFM lifecycle module, manual expansion or shrinkage operations are supported. The manual trigger mode means newly increasing the capacity-expanding operation and capacity-shrinking operation at the VNFM lifecycle management module. It is possible to trigger the capacity-expanding operation or capacity-shrinking operation by manually selecting and inputting parameters. The automatic trigger mode means triggering the capacity-expanding operation or capacity-shrinking operation by collecting the performance indices and performing policy judgment as stated above.

In summary, the implementation of the embodiments of the present disclosure at least achieve the following advantageous effects:
Embodiments of the present disclosure provide a VBRAS control method. During operation, it is feasible to obtain the performance parameters of the protocol component in the VBRAS shared resource pool, such as the number of online users, a utilization rate of a memory of the protocol component and a utilization rate of a CPU of the protocol component, and perform enabled control for the protocol component in the VBRAS according to the performance parameters, thereby implementing capacity-expanding and capacity-shrinking control of the protocol component in the shared resource pool and achieving dynamic capacity expansion or capacity shrinkage of the protocol component, so that it is possible to reasonably use the resources of the protocol component, and solve the current problem about failure to implement dynamic management of the VBRAS protocol component.

Those skilled in the art should appreciate that embodiments of the present disclosure may be provided as a method, system, or computer program product. Accordingly, the present disclosure may take the form of a hardware embodiment, a software embodiment, or a combination of software and hardware aspects. Moreover, the present disclosure may take the form of a computer program product embodied on one or more computer-usable storage media (including but not limited to disk storage and optical storage, etc.) including a computer usable program code.

The present disclosure is described with reference to flowcharts and/or block diagrams of methods, apparatus (system), and computer program products according to embodiments of the disclosure. It should be appreciated that each step and/or block of the flowcharts and/or block diagrams, and combinations of steps and/or blocks in the flowcharts and/or block diagrams, can be implemented by computer program instructions. These computer program instructions may be provided to a processor of a general-purpose computer, special-purpose computer, embedded processor, or other programmable data processing device to produce a machine so that instructions executed by the processor of the computer or other programmable data processing device produces a device for implementing functions specified in one or more steps of the flowchart or in one or more blocks of the block diagram.

The computer program instructions may also be stored in a computer readable memory that can guide a computer or other programmable data processing device to operate in a particular manner, such that the instructions stored in the computer readable memory produce an article of manufacture including the instruction device.

The instruction device implements functions specified in one or more steps of the flowchart or in one or more blocks of the block diagram.

These computer program instructions may also be loaded onto a computer or other programmable data processing device such that a series of operational steps are performed on the computer or other programmable device to produce computer-implemented processing, so that instructions executed on the computer or other programmable device provide steps for implementing functions specified in one or more steps of the flowchart or in one or more blocks of the block diagram.

## Claims

1. A control method of a virtualized broadband remote access server, **characterized in** comprising:
obtaining (101) a performance parameter of a protocol component in a shared resource pool of a virtualized broadband remote access server;
according to the performance parameter, detecting (102) a control operation that satisfies a preset policy; the control operation is used to control the protocol component of the virtualized broadband remote access server; and
performing (103) the detected control operation;
wherein the control operation comprises a capacity-expanding operation or a capacity-shrinking operation;
wherein performing the capacity-expanding operation comprises activating a protocol component that is not added to the shared resource pool, and adding the newly-activated protocol component to the shared resource pool; or performing the capacity-shrinking operation comprises making a portion of protocol components that have already been added to the shared resource pool hibernate, and deleting the hibernating protocol components from the shared resource pool;
wherein the performance parameter comprises at least one of a number of users on respective protocol components of all protocol components that have already been added to the shared resource pool, a protocol component network port bandwidth, a utilization rate of a memory of the protocol component, or a utilization rate of a central processing unit, CPU, of the protocol component; and
wherein according to the performance parameter, detecting the control operation that satisfies the preset policy comprises:
calculating the total number of online users according to the number of users on respective protocol components of all protocol component that have already been added to the shared resource pool; judging whether at least one of the total number of online users, the number of users on the protocol components, the protocol component network port bandwidth, the utilization rate of the memory of the protocol component and the utilization rate of the CPU of the protocol component is greater than an upper threshold of each parameter in the preset policy; and if yes, hitting the capacity-expanding operation; or
judging whether the number of users on the protocol component is less than a lower threshold in the preset policy, if yes, hitting the capacity-shrinking operation.

2. The control method according to claim 1, further comprising: not performing a second control operation even though the second control operation is detected when a first control operation is performed; re-detecting a control operation that satisfies a preset policy, after the execution of the first control operation is completed.

3. The control method according to claim 1, wherein a manner of obtaining the performance parameter of the protocol component in the shared resource pool in the virtualized broadband remote access server comprises: using at least one of a simple network management protocol, a secure shell protocol, a remote login protocol and a hypertext transfer protocol to actively obtain the performance parameter from a management component of the virtualized broadband remote access server, and/or
receiving the performance parameter uploaded by the management component of the virtualized broadband remote access server.

4. The control method according to claim 1, further comprising: configuring at least one standby protocol component for the shared resource pool, the standby protocol component being configured to perform service of a to-be-expanded protocol component when the detected control operation is a capacity-expanding operation.

5. The control method according to claim 1, further comprising: receiving and executing a user-initiated control operation.

6. The control method according to claim 1, further comprising: receiving a user's setting operation, and configuring a data type of the performance parameter and/or a capacity expansion upper limit value and a capacity shrinkage lower limit value of each performance parameter in the preset policy.

7. The control method according to claim 1, wherein the capacity-expanding operation comprises:
using an index number of the protocol component to report the protocol component to the control component;
establishing a binding correspondence relationship between the index number of the protocol component and an Ethernet network port of a load sharing component; and
completing service distribution based on the binding correspondence relationship.

8. The control method according to claim 1, **characterized in** further comprising:
updating an upper threshold corresponding to the total number of online users in the preset policy according to the total number of protocol components that have already been added to the shared resource pool.

9. The control method according to claim 1, wherein after hitting the capacity-shrinking operation, the control method further comprises:
periodically detecting whether to hit the capacity-shrinking operation; and
if yes, and if the number of times of consecutive hits is greater than an execution threshold, performing the capacity-shrinking operation.

10. A computer storage medium storing executable instructions for executing the method according to any one of claims 1-9.

11. A control apparatus of a virtualized broadband remote access server, **characterized in** comprising: an obtaining module (21), a control module (22), a capacity-expanding module (23), and a capacity-shrinking module (24), wherein,
the obtaining module (21) is configured to obtain a performance parameter of a protocol component in a shared resource pool in the virtualized broadband remote access server; wherein the performance parameter comprises at least one of a number of users on respective protocol components of all protocol components that have already been added to the shared resource pool, a protocol component network port bandwidth, a utilization rate of a memory of the protocol component, or a utilization rate of a central processing unit, CPU, of the protocol component;
the control module (22) is configured to, according to the performance parameter, detect a control operation that satisfies a preset policy; the control operation is used to control the protocol component of the virtualized broadband remote access server, and the control operation comprises a capacity-expanding operation or a capacity-shrinking operation; the capacity-expanding module or capacity-shrinking module performs the detected control operation;
the capacity-expanding module (23) is configured to activate a protocol component that is not added to the shared resource pool, and add the newly-activated protocol component to the shared resource pool; and
the capacity-shrinking module (24) is configured to make a portion of protocol components that have already been added to the shared resource pool hibernate, and delete the hibernating protocol components from the shared resource pool;
wherein the control module (22) is configured to:
calculate the total number of online users according to the number of users on respective protocol components of all protocol component that have already been added to the shared resource pool; judge whether at least one of the total number of online users, the number of users on the protocol components, the protocol component network port bandwidth, the utilization rate of the memory of the protocol component and the utilization rate of the CPU of the protocol component is greater than an upper threshold of each parameter in the preset policy; and if yes, hit the capacity-expanding operation; or
judge whether the number of users on the protocol component is less than a lower threshold in the preset policy, if yes, hit the capacity-shrinking operation.

12. A communication system, **characterized in** comprising at least one virtualized broadband remote access server, and the control apparatus according to claim 11.

## Patentansprüche

1. Ein Steuerverfahren eines virtualisierten Breitband-Fernzugriffsservers, BRAS, **dadurch gekennzeichnet: dass** es umfasst:
Erhalten (101) eines Leistungsparameters einer Protokollkomponente in einem gemeinsam genutzten Ressourcenpool eines virtualisierten Breitband-Fernzugriffsservers;
Erkennen (102) einer Steueroperation, die eine voreingestellte Richtlinie erfüllt, gemäß dem Leistungsparameter; die Steueroperation wird zum Steuern der Protokollkomponente des virtualisierten Breitband-Fernzugriffsservers verwendet; und
Durchführen (103) der erkannten Steueroperation;
wobei die Steueroperation eine Kapazitätserweiterungsoperation oder eine Kapazitätsverringerungsoperation umfasst;
wobei das Durchführen der Kapazitätserweiterungsoperation das Aktivieren einer Protokollkomponente, die nicht zum gemeinsam genutzten Ressourcenpool hinzugefügt wird, und das Hinzufügen der neu aktivierten Protokollkomponente zum gemeinsam genutzten Ressourcenpool umfasst; oder das Durchführen der Kapazitätsverringerungsoperation das Bringen eines Teils der Protokollkomponenten, die bereits zum des gemeinsam genutzten Ressourcenpools hinzugefügt wurden, in Ruhestand und das Löschen der Protokollkomponenten im Ruhezustand aus dem gemeinsam genutzten Ressourcenpool umfasst;
wobei der Leistungsparameter mindestens eines der Folgenden umfasst: die Anzahl der Benutzer in jeweiligen Protokollkomponenten aller Protokollkomponenten, die bereits zum gemeinsam genutzten Ressourcenpool hinzugefügt wurden, eine Bandbreite des Protokollkomponente-Netzwerkports, eine Auslastung eines Speichers der Protokollkomponente, oder eine Auslastung einer Zentraleinheit, CPU, der Protokollkomponente; und
wobei das Erkennen der Steueroperation, die die voreingestellte Richtlinie erfüllt, gemäß dem Leistungsparameter umfasst:
Berechnen der Gesamtzahl der Online-Benutzer gemäß der Anzahl der Benutzer in den jeweiligen Protokollkomponenten aller Protokollkomponenten, die bereits zum gemeinsam genutzten Ressourcenpool hinzugefügt wurden; Beurteilen, ob mindestens eines der Folgenden: die Gesamtzahl der Online-Benutzer, die Anzahl der Benutzer in den Protokollkomponenten, die Bandbreite des Protokollkomponente-Netzwerkports, die Auslastung des Speichers der Protokollkomponente und die Auslastung der CPU der Protokollkomponente größer ist als ein oberer Schwellenwert für jeden Parameter in der voreingestellten Richtlinie; und wenn ja, wird die Kapazitätserweiterungsoperation ausgeführt; oder
Beurteilen, ob die Anzahl der Benutzer in der Protokollkomponente unter einem niedrigeren Schwellenwert in der voreingestellten Richtlinie liegt, wenn ja, wird die Kapazitätsverringerungsoperation ausgeführt.

2. Steuerverfahren nach Anspruch 1, weiter umfassend: Nichtdurchführen einer zweiten Steueroperation, obwohl die zweite Steueroperation erkannt wird, wenn eine erste Steueroperation ausgeführt wird; erneutes Erkennen einer Steueroperation, die eine voreingestellte Richtlinie erfüllt, nachdem die Ausführung der ersten Steueroperation abgeschlossen ist.

3. Steuerverfahren nach Anspruch 1, wobei eine Art und Weise des Erhaltens des Leistungsparameters der Protokollkomponente in dem gemeinsam genutzten Ressourcenpool in dem virtualisierten Breitband-Fernzugriffsserver umfasst:
Verwenden mindestens eines der Folgenden: ein einfaches Netzwerkverwaltungsprotokoll, ein Secure Shell-Protokoll, ein Fernanmeldeprotokoll und ein Hypertextübertragungsprotokoll, um den Leistungsparameter aktiv von einer Verwaltungskomponente des virtualisierten Breitband-Fernzugriffsservers zu erhalten, und / oder
Empfangen des Leistungsparameters, der von der Verwaltungskomponente des virtualisierten Breitband-Remotezugriffsservers hochgeladen wurde.

4. Steuerverfahren nach Anspruch 1, weiter umfassend: Konfigurieren mindestens einer Standby-Protokollkomponente für den gemeinsam genutzten Ressourcenpool, wobei die Standby-Protokollkomponente konfiguriert ist, um den Dienst einer zu erweiternden Protokollkomponente auszuführen, wenn die erkannte Steueroperation eine Kapazitätserweiterungsoperation ist.

5. Steuerverfahren nach Anspruch 1, weiter umfassend: Empfangen und Ausführen einer vom Benutzer initiierten Steueroperation.

6. Steuerverfahren nach Anspruch 1, ferner umfassend: Empfangen einer Einstelloperation eines Benutzers und Konfigurieren eines Datentyps des Leistungsparameters und/oder eines oberen Grenzwerts für die Kapazitätserweiterung und eines unteren Grenzwerts für die Kapazitätserweiterung jedes Leistungsparameters in der voreingestellte Richtlinie.

7. Steuerverfahren nach Anspruch 1, wobei die Kapazitätserweiterungsoperation umfasst:
Verwenden einer Indexnummer der Protokollkomponente, um die Protokollkomponente bei der Steuerkomponente zu melden;
Herstellen einer verbindlichen Korrespondenzbeziehung zwischen der Indexnummer der Protokollkomponente und einem Ethernet-Netzwerkport einer Lastverteilungskomponente; und
Abschließen der Serviceverteilung basierend auf der verbindlichen Korrespondenzbeziehung.

8. Steuerverfahren nach Anspruch 1, dadurch gekenngzeichnet, dass es weiter umfasst:
Aktualisieren eines oberen Schwellenwerts, der der Gesamtzahl der Online-Benutzer in der voreingestellten Richtlinie entspricht, gemäß der Gesamtzahl der Protokollkomponenten, die bereits zum gemeinsam genutzten Ressourcenpool hinzugefügt wurden.

9. Steuerverfahren nach Anspruch 1, wobei nach dem Ausführen der Kapazitätsverringerungsoperation das Kontrollverfahren ferner umfasst:
periodisches Erkennen, ob der Kapazitätsverringerungsoperation ausgeführt werden soll; und
Wenn ja, und wenn die Zahl der aufeinanderfolgenden Ausführungen größer als ein Ausführungsschwellenwert ist, wird die Kapazitätsverringerungsoperation ausgeführt.

10. Computerspeichermedium, das ausführbare Anweisungen zum Ausführen des Verfahrens gemäß einem der Ansprüche 1 bis 9 speichert.

11. Steuervorrichtung eines virtualisierten Breitband-Fernzugriffsservers, **gekennzeichnet durch**: ein Erhaltungsmodul (21), ein Steuermodul (22), ein Kapazitätserweiterungsmodul (23) und ein Kapazitätsverringerungsmodul (24), wobei das Erhaltungsmodul (21) zum Erhalten eines Leistungsparameters einer Protokollkomponente in einem gemeinsam genutzten Ressourcenpool in dem virtualisierten Breitband-Fernzugriffsserver konfiguiert ist, wobei der Leistungsparameter mindestens eines der Folgended umfasst: die Anzahl der Benutzer in jeweiligen Protokollkomponenten aller Protokollkomponenten, die bereits zum gemeinsam genutzten Ressourcenpool hinzugefügt wurden, eine Bandbreite des Protokollkomponente-Netzwerkports, eine Auslastung eines Speichers der Protokollkomponente, oder eine Auslastung einer Zentraleinheit, CPU, der Protokollkomponente;
das Steuermodul (22) zum Erkennen der Steueroperation, die eine voreingestellte Richtlinie erfüllt, gemäß dem Leistungsparameter konfiguiert ist; die Steueroperation zum Steuern der Protokollkomponente des virtualisierten Breitband-Fernzugriffsservers verwendet wird, und die Steueroperation eine Kapazitätserweiterungsoperation oder eine Kapazitätsverringerungsoperation umfasst; das Kapazitätserweiterungsmodul oder das Kapazitätsverringerungsmodul die erkannte Steueroperation ausführt;
das Kapazitätserweiterungsmodul (23) zum Aktivieren der Protokollkomponente, die nicht zum gemeinsam genutzten Ressourcenpool hinzugefügt wurde, und zum Hinzufügen der neu aktivierten Protokollkomponente zum gemeinsam genutzten Ressourcenpool konfiguiert ist, und
das Kapazitätsverringerungsmodul (24) zum Bringen eines Teils der Protokollkomponenten, die bereits zum gemeinsam genutzten Ressourcenpool hinzugefügt wurden, in den Ruhezustand und zum Löschen der Protokollkomponenten im Ruhezustand aus dem gemeinsam genutzten Ressourcenpool konfiguiert wird,
wobei das Steuermodul (22) konfiguriert ist, zum:
Berechnen der Gesamtzahl der Online-Benutzer gemäß der Anzahl der Benutzer in den jeweiligen Protokollkomponenten aller Protokollkomponenten, die bereits zum gemeinsam genutzten Ressourcenpool hinzugefügt wurden; Beurteilen, ob mindestens eines der Folgenden: die Gesamtzahl der Online-Benutzer, die Anzahl der Benutzer in den Protokollkomponenten, die Bandbreite des Protokollkomponente-Netzwerkports, die Auslastung des Speichers der Protokollkomponente und die Auslastung der CPU der Protokollkomponente größer ist als ein oberer Schwellenwert für jeden Parameter in der voreingestellten Richtlinie; und wenn ja, wird die Kapazitätserweiterungsoperation ausgeführt; oder
Beurteilen, ob die Anzahl der Benutzer in der Protokollkomponente unter einem niedrigeren Schwellenwert in der voreingestellten Richtlinie liegt, wenn ja, wird die Kapazitätsverringerungsoperation ausgeführt.

12. Kommunikationssystem, **dadurch gekennzeichnet, dass** es mindestens einen virtualisierten Breitband-Fernzugriffsserver und die Steuervorrichtung nach Anspruch 11 umfasst.

## Revendications

1. Procédé de commande d'un serveur d'accès à distance à large bande virtualisé, **caractérisé en ce qu'**il comprend les étapes ci-dessous consistant à :
obtenir (101) un paramètre de performance d'un composant de protocole dans un pool de ressources partagées d'un serveur d'accès à distance à large bande virtualisé ;
selon le paramètre de performance, détecter (102) une opération de commande qui satisfait une politique prédéfinie ; dans lequel l'opération de commande est utilisée pour commander le composant de protocole du serveur d'accès à distance à large bande virtualisé ; et
mettre en œuvre (103) l'opération de commande détectée ;
dans lequel l'opération de commande comprend une opération d'extension de capacités ou une opération de réduction de capacités ;
dans lequel l'étape de mise en œuvre de l'opération d'extension de capacités comprend l'étape consistant à activer un composant de protocole qui n'est pas ajouté au pool de ressources partagées, et l'étape consistant à ajouter le composant de protocole nouvellement activé au pool de ressources partagées ; ou l'étape de mise en œuvre de l'opération de réduction de capacités comprend l'étape consistant à amener à hiberner une partie de composants de protocole qui ont déjà été ajoutés au pool de ressources partagées, et l'étape consistant à supprimer les composants de protocole en hibernation du pool de ressources partagées ;
dans lequel le paramètre de performance comprend au moins l'un des éléments parmi un nombre d'utilisateurs sur des composants de protocole respectifs parmi tous les composants de protocole qui ont déjà été ajoutés au pool de ressources partagées, une largeur de bande de port de réseau de composant de protocole, un taux d'utilisation d'une mémoire du composant de protocole, ou un taux d'utilisation d'une unité centrale de traitement, CPU, du composant de protocole ; et
dans lequel, selon le paramètre de performance, l'étape de détection de l'opération de commande qui satisfait la politique prédéfinie comprend les étapes ci-dessous consistant à :
calculer le nombre total d'utilisateurs en ligne selon le nombre d'utilisateurs sur des composants de protocole respectifs parmi tous les composants de protocole qui ont déjà été ajoutés au pool de ressources partagées ;
évaluer si au moins l'un des éléments parmi le nombre total d'utilisateurs en ligne, le nombre d'utilisateurs sur les composants de protocole, la largeur de bande de port de réseau de composant de protocole, le taux d'utilisation de la mémoire du composant de protocole, et le taux d'utilisation de l'unité CPU du composant de protocole, est supérieur à un seuil supérieur de chaque paramètre dans la politique prédéfinie ; et le cas échéant, lancer l'opération d'extension de capacités ; ou
évaluer si le nombre d'utilisateurs sur le composant de protocole est inférieur à un seuil inférieur dans la politique prédéfinie, et le cas échéant, lancer l'opération de réduction de capacités.

2. Procédé de commande selon la revendication 1, comprenant en outre les étapes ci-après consistant à : ne pas mettre en œuvre une seconde opération de commande, même si la seconde opération de commande est détectée lorsqu'une première opération de commande est mise en oeuvre ; et détecter à nouveau une opération de commande qui satisfait une politique prédéfinie, à l'issue de l'exécution de la première opération de commande.

3. Procédé de commande selon la revendication 1, dans lequel une manière d'obtenir le paramètre de performance du composant de protocole dans le pool de ressources partagées dans le serveur d'accès à distance à large bande virtualisé comprend : l'utilisation d'au moins l'un des protocoles parmi un protocole de gestion de réseau simple, un protocole Secure Shell, un protocole de connexion à distance et un protocole de transfert hypertexte, pour obtenir activement le paramètre de performance à partir d'un composant de gestion du serveur d'accès à distance à large bande virtualisé ; et/ou
la réception du paramètre de performance téléchargé par le composant de gestion du serveur d'accès à distance à large bande virtualisé.

4. Procédé de commande selon la revendication 1, comprenant en outre l'étape ci-après consistant à : configurer au moins un composant de protocole de secours pour le pool de ressources partagées, le composant de protocole de secours étant configuré de manière à mettre en œuvre un service d'un composant de protocole à étendre lorsque l'opération de commande détectée est une opération d'extension de capacités.

5. Procédé de commande selon la revendication 1, comprenant en outre les étapes ci-après consistant à : recevoir et exécuter une opération de commande initiée par l'utilisateur.

6. Procédé de commande selon la revendication 1, comprenant en outre les étapes ci-après consistant à : recevoir une opération de réglage de l'utilisateur, et configurer un type de données du paramètre de performance et/ou une valeur de limite supérieure d'extension de capacités et une valeur de limite inférieure de réduction de capacités de chaque paramètre de performance dans la politique prédéfinie.

7. Procédé de commande selon la revendication 1, dans lequel l'opération d'extension de capacités comprend les étapes ci-dessous consistant à :
utiliser un numéro d'index du composant de protocole pour signaler le composant de protocole au composant de commande ;
établir une relation de correspondance de liaison entre le numéro d'index du composant de protocole et un port de réseau Ethernet d'un composant de partage de charge ; et
achever une distribution de services sur la base de la relation de correspondance de liaison.

8. Procédé de commande selon la revendication 1, **caractérisé en ce qu'**il comprend en outre l'étape ci-dessous consistant à :
mettre à jour un seuil supérieur correspondant au nombre total d'utilisateurs en ligne dans la politique prédéfinie selon le nombre total de composants de protocole qui ont déjà été ajoutés au pool de ressources partagées.

9. Procédé de commande selon la revendication 1, dans lequel, suite au lancement de l'opération de réduction de capacités, le procédé de commande comprend en outre les étapes ci-dessous consistant à :
détecter périodiquement s'il convient de lancer l'opération de réduction de capacités ; et
le cas échéant, et si le nombre d'occurrences de lancements consécutifs est supérieur à un seuil d'exécution, mettre en œuvre l'opération de réduction de capacités.

10. Support de stockage informatique stockant des instructions exécutables pour exécuter le procédé selon l'une quelconque des revendications 1 à 9.

11. Appareil de commande d'un serveur d'accès à distance à large bande virtualisé, **caractérisé en ce qu'**il comprend : un module d'obtention (21), un module de commande (22), un module d'extension de capacités (23), et un module de réduction de capacités (24), dans lequel,
le module d'obtention (21) est configuré de manière à obtenir un paramètre de performance d'un composant de protocole dans un pool de ressources partagées dans le serveur d'accès à distance à large bande virtualisé ; dans lequel le paramètre de performance comprend au moins l'un des éléments parmi un nombre d'utilisateurs sur des composants de protocole respectifs parmi tous les composants de protocole qui ont déjà été ajoutés au pool de ressources partagées, une largeur de bande de port de réseau de composant de protocole, un taux d'utilisation d'une mémoire du composant de protocole, ou un taux d'utilisation d'une unité centrale de traitement, CPU, du composant de protocole ;
le module de commande (22) est configuré de manière à, selon le paramètre de performance, détecter une opération de commande qui satisfait une politique prédéfinie ; dans lequel l'opération de commande est utilisée pour commander le composant de protocole du serveur d'accès à distance à large bande virtualisé, et l'opération de commande comprend une opération d'extension de capacités ou une opération de réduction de capacités ; et le module d'extension de capacités ou le module de réduction de capacités met en œuvre l'opération de commande détectée ;
le module d'extension de capacités (23) est configuré de manière à activer un composant de protocole qui n'est pas ajouté au pool de ressources partagées, et à ajouter le composant de protocole nouvellement activé au pool de ressources partagées ; et
le module de réduction de capacités (24) est configuré de manière à amener à hiberner une partie de composants de protocole qui ont déjà été ajoutés au pool de ressources partagées, et à supprimer les composants de protocole en hibernation du pool de ressources partagées ;
dans lequel le module de commande (22) est configuré de manière à :
calculer le nombre total d'utilisateurs en ligne selon le nombre d'utilisateurs sur des composants de protocole respectifs parmi tous les composants de protocole qui ont déjà été ajoutés au pool de ressources partagées ;
évaluer si au moins l'un des éléments parmi le nombre total d'utilisateurs en ligne, le nombre d'utilisateurs sur les composants de protocole, la largeur de bande de port de réseau de composant de protocole, le taux d'utilisation de la mémoire du composant de protocole, et le taux d'utilisation de l'unité CPU du composant de protocole, est supérieur à un seuil supérieur de chaque paramètre dans la politique prédéfinie ; et le cas échéant, lancer l'opération d'extension de capacités ; ou
évaluer si le nombre d'utilisateurs sur le composant de protocole est inférieur à un seuil inférieur dans la politique prédéfinie, et le cas échéant, lancer l'opération de réduction de capacités.

12. Système de communication, **caractérisé en ce qu'**il comprend au moins un serveur d'accès à distance à large bande virtualisé, et l'appareil de commande selon la revendication 11.
